# EUROPEAN PATENT APPLICATION

(11) **EP 1 594 159 A2**
(43) Date of publication of application: **09.11.2005**
(21) Application number: 05005608.4
(22) Date of filing: 15.03.2005
(51) Int. Cl.: H01K 1/32, H01J 1/63, C09K 11/08

(54) **Incandescent lamp**

(30) Priority: 25.03.2004 JP 2004089753; 31.01.2005 JP 2005023647
(71) Applicant: NEC CORPORATION, Tokyo (JP)
(72) Inventor: Nomura, Koji, Shinagawa-ku Tokyo 141-0031 (JP); Hotta, Shinichi, Shinagawa-ku Tokyo 141-0031 (JP)
(74) Representative: Glawe, Delfs, Moll

(57) **Abstract**

By adding the afterglow function to the incandescent lamp, it is made easier, in the place where the incandescent lamp is used, to recognize objects nearby in the darkness after the lamp is turned off or when the electrical power is cut off. An incandescent lamp wherein an inner surface of a glass globe is coated with a phosphorescent phosphor is provided. For the phosphorescent phosphor, there can be used a phosphorescent phosphor comprising, as a host crystal, a compound of the general formula either MAl₂O₄ or MAl₁₄O₂₅ wherein M is one or more of metal elements selected from the group consisting of calcium, strontium and barium, and utilizing europium (Eu) as an activator, together with dysprosium (Dy) or neodymium (Nd) as a coactivator; as well as a phosphorescent phosphor comprising Y₂O₂S as a host crystal, and utilizing europium (Eu), magnesium (Mg) or titanium (Ti) as an activator.

## Description

### BACKGROUND OF THE INVENTION

### 1. Field of the invention

The present invention relates to an incandescent lamp in wide use for general lighting, and more particularly to an incandescent lamp having an afterglow function that is additionally provided by an internal coating of a glass globe surface thereof with a phosphorescent phosphor.

### 2. Description of the Related Art

The conventional incandescent lamp which is used widely for general lighting and such has a structure in which a stem fitted with a pair of lead wires is sealed in the end section of a globe made of soft glass, and a coiled filament of tungsten is disposed between these lead wires, and an inert gas such as argon is sealed in the inside of the glass globe.

For the conventional incandescent lamp, either a transparent glass globe onto which nothing is internally stuck or a glass globe on the inner surface of which a diffusion layer made of ultra-fine particles of metal oxide such as silica is formed for the purpose of reducing the glare of the lamp light is utilized. However, because any measures to provide a glow after the lamp is turned off is not taken for either the inner or the outer surface of the incandescent lamp, turning-off the lamp may immediately bring a complete darkness in the vicinity, which makes distinction of objects impossible.

Accordingly, in order to provide an after grown the lamp is turned off, there have been already proposed the phosphorescent type fluorescent lamps wherein a coating of a phosphor having afterglow characteristics is applied onto the inner surface of a glass tube (For instance, see Japanese Patent Application Laid-open No. 055190 / 1997). With these phosphorescent type fluorescent lamps, the afterglow which may be faint but is bright enough to distinguish objects can be around for a while after the lamp is turned off so that people can move relatively safely without direct illumination in their living space and gathering space, that is, not only in a kitchen, a living room or such in the private household but also in an office, a large-sized store, a theater, a bathhouse, an underground shopping complex and such, and reach their aimed place.

Especially in the place where a large number of people gather such as a large-sized shop, a theater, an underground shopping complex, if a power failure occurs due to a disaster, for instance, a fire, an earthquake or the like, a sudden change of the illuminated space into the complete darkness may cause a mass panic. On such an occasion, if the afterglow of the phosphorescent type fluorescent lamps enables people to see objects, people can escape without being struck by a panic. The phosphorescent fluorescent lamps of this sort have already been put to practical use, whether they are straight tube type, ring-shaped type or incandescent lamp type ones.

Meanwhile, a phosphorescent type incandescent lamp which is externally coated with a phosphorescent phosphor has been also proposed. However, when a phosphorescent phosphor is applied onto the external surface of the incandescent lamp, the phosphor layer is exposed to the air, which gives rise to a problem of weatherability. Further, in the case that the phosphor layer is hit or rubbed by another object, the phosphor layer may be readily peeled off. Accordingly, practical application of an incandescent lamp which is internally coated with a phosphorescent phosphor has been long waited for.

Nevertheless, such an incandescent lamp has not been put to practical use, yet. The reason why the application of the phosphorescent phosphor to the incandescent lamp is found difficult is as follows. When a coating of a conventional phosphorescent phosphor is applied onto the inner surface of an incandescent lamp (the inner surface of a glass globe), the phosphor layer readily flake off with a slight physical impact or such. Moreover, the phosphorescent phosphor in the incandescent lamp is more liable to degrade than that in the fluorescent lamp, because the phosphor, together with the whole inner surface of the incandescent lamp, is subjected to the heat from the filament while the lamp is on. Such degradation of the phosphorescent phosphor reduces the afterglow output, and causes discoloration of the phosphorescent phosphor, which tends to bring about a decrease in light output of the incandescent lamp itself.

The present inventors conducted investigations into the cause of the degradation of the phosphorescent phosphor that occurs in the incandescent lamp, the phosphorescent phosphor forming an internal coating of the incandescent lamp, and revealed that phosphorescent phosphor particles with small particle sizes bring thermal degradation and discoloration, and, therefore, have direct effects on the afterglow output and the like, and further showed that a section of the phosphor layer where phosphor particles with large particle sizes are present is liable to flake off with a physical impact or such.

The inventors found out that, if the phosphorescent phosphor material is utilized under certain conditions, the thermal degradation, discoloration and flaking-off of the phosphor layer and such can be prevented with effect, and, therefore, the incandescent lamp to have the afterglow characteristics can be attained by coating the inner surface of the glass globe with the phosphorescent phosphor which satisfies such conditions.

Accordingly, an object of the present invention is to give an additional function of the afterglow to the incandescent lamp which is used for general lighting as widely as the fluorescent lamp and thereby provide an incandescent lamp which can facilitate, in the place where the incandescent lamp is used, people thereabout to recognize objects nearby in the darkness after the lamp is turned off or when the electrical power is cut off, as an assistance to their eyesight.

### SUMMARY OF THE INVENTION

The present invention relates to an incandescent lamp wherein an inner surface of a glass globe is coated with a phosphorescent phosphor.

With a phosphorescent phosphor of the present invention, the degradation of the afterglow characteristics, that is, the degradation of the phosphor does not happen when the phosphor has a particle size of not less than 3 µm and more preferably not less than 5 µm, while the flaking-off of the layer does not occur when the phosphor has a particle size of not greater than 19 µm and more preferably not greater than 15 µm. In other words, it is apparent that neither degradation of the afterglow characteristics not the flaking-off of the layer takes place when the phosphor has a particle-size distribution in which a lower limit is 3 µm and more preferably 5 µm and an upper limit is 19 µm and more preferably 15 µm.

For an incandescent lamp of the present invention, there can be used at least one of
a phosphorescent phosphor comprising, as a host crystal, a compound of the general formula either MAl₂O₄ or MAl₁₄O₂₅ wherein M is one or more of metal elements selected from the group consisting of calcium, strontium and barium, and europium (Eu) used as an activator, as well as dysprosium (Dy) or neodymium (Nd) used as a coactivator; and
a phosphorescent phosphor comprising Y₂O₂S as a host crystal, and europium (Eu), magnesium (Mg) or titanium (Ti) as an activator.

It is preferable that the phosphorescent phosphor has a coating weight of 2 mg to 6 mg per unit area (1cm²), and that a luminous flux value of the incandescent lamp coated with the phosphorescent phosphor is not less than 90 % of a luminous flux value of the incandescent lamp without the coating.

The incandescent lamp of the present invention emits light normally through red heat of the filament while the lamp is on, but once the lamp is turned off or the electrical energy therefor is cut off, the phosphorescent phosphor with which the inner surface of the glass globe therein is coated emits the afterglow, releasing the energy accumulated from the visible light and the temperature of the inside of the glass globe.

As a result, the incandescent lamp of the present invention can facilitate, in the place where the incandescent lamp is used, people thereabout to recognize objects nearby in the darkness, after the lamp is turned off or when the electrical power is cut off, as an assistance to their eyesight. Moreover, an application of a coating of the phosphorescent phosphor onto the inner surface of the incandescent lamp enables to solve a problem of weatherability and a problem of flaking-off of the layer.

### BRIEF DESCRIPTION OF THE DRAWING

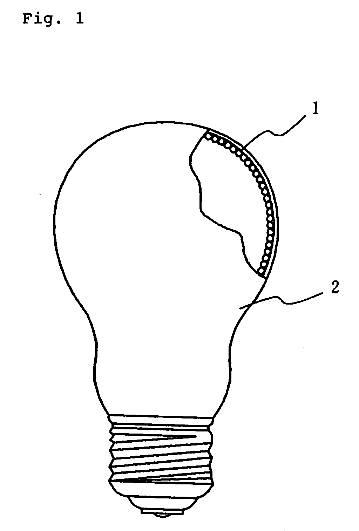

Fig. 1 is a schematic view showing a structure of an incandescent lamp of the present invention.

### DETAILED DESCRIPTION OF THE INVENTION AND PREFERRED EMBODIMENTS

Next, referring the drawing, a preferred embodiment of the present invention is described below. Fig. 1 is a view showing a structure of a portion of an incandescent lamp of the present invention. In an incandescent lamp of the present invention, a phosphorescent phosphor layer is formed inside a glass globe.

Firstly, a phosphorescent phosphor used in the present invention is described below. As a phosphorescent phosphor, there can be used a phosphorescent phosphor comprising a compound of the general formula either MAl₂O₄ or MAl₁₄O₂₅ (M is one or more of metal elements selected from the group consisting of calcium, strontium and barium) as a host crystal and utilizing europium (Eu) as an activator as well as dysprosium (Dy), neodymium (Nd) or such as a coactivator, examples of which include SrAl₂O₄ : Eu, Dy; Sr₄Al₁₄O₂₅ : Eu, Dy and CaAl₂O₄ : Eu, Nd.

Further, another phosphorescent phosphor that can be used herein comprises Y₂O₂S as a host crystal and utilizes europium (Eu), magnesium (Mg) or titanium (Ti) as an activator, and its examples include Y₂O₃ : Eu and Y₂O₃ : Eu, Mg. As the phosphorescent phosphor in the present embodiment, one or more phosphorescent phosphors of the afore-mentioned ones are used.

Herein, it will be obvious to those skilled in the art that the present invention is not limited to use the above phosphorescent phosphors and any other phosphorescent phosphors than these can be used without departing the spirit of the invention.

Using SrAl₂O₄ : Eu, Dy; Sr₄Al₁₄O₂₅ : Eu, Dy; CaAl₂O₄ : Eu, Nd and Y₂O₃ : Eu as the phosphorescent phosphors, the relationships between the particle size and the flaking-off of the layer as well as the afterglow illuminance were examined. The results are shown in Table 1.

These assessments were made by making the incandescent lamps of GW 110V 60W 95 standard coated with respective phosphors at a rate of 4 mg per unit area (1cm²).

**Table 1**

| | SrAl₂O₄:Eu,Dy | | Sr₄Al₁₄O₂₅:Eu,Dy | | CaAl₂O₄:Eu,Nd: | | Y₂O₃:Eu | |
|---|---|---|---|---|---|---|---|---|
| Particle Size of Afterglow Phosphor (µm) | Flaking-off of Layer | Afterglow Illuminance | Flaking-off of Layer | Afterglow Illuminance | Flaking-off of Layer | Afterglow Illuminance | Flaking-off of Layer | Afterglow Illuminance |
| 3.0±1.5 | ○ | × | ○ | × | ○ | × | ○ | × |
| 5.0 ± 2.0 | ○ | ○ | ○ | ○ | ○ | ○ | ○ | ○ |
| 8.0 ± 3.0 | ○ | ○ | ○ | ○ | ○ | ○ | ○ | ○ |
| 10.0 ± 3.0 | ○ | ○ | ○ | ○ | ○ | ○ | ○ | ○ |
| 15.0 ± 4.0 | ○ | ○ | ○ | ○ | ○ | ○ | ○ | ○ |
| 20.0 ± 4.0 | × | ○ | × | ○ | × | ○ | × | ○ |
| Particle Size : Shown with the median and 85 % or more of the measured values are within a range of that value ± X µm. | | | | | | | | |

In Table 1, 85 % or more of the measured values for the particle size of each phosphor are within a range of the value shown in the table ± X µm so that the phosphor particles having particle sizes above the upper limit and below the lower limit are 7.5 % or so of the whole particles each.

The assessments for the lamps with various coatings were made according to the following criterion; that is, when the afterglow illuminance after 1000 operating hours of the lamp was 80 % or more of its initial afterglow illuminance, a mark of a circle ○ is given; when it was 65 % to 80 %, a mark of a triangle Δ and when it was 65 % or less, a mark of a cross × is given.

In the measurements of the flaking-off of the layers, a weight of 1 g was made to fall free from a height of 50 cm to the fluorescent lamp only once, and it was examined whether a piece of the phosphor layer with a diameter of 1 mm or greater flaked off or not. In the Table 1, no occurrence of such flaking-off of the layer is presented with a mark of a circle, and the occurrence of flaking-off, with a mark of a cross.

The results shown in Table 1 indicate that when the phosphor has a particle size of not less than 3 µm and more preferably not less than 5 µm, the degradation of the afterglow illuminance, namely, the degradation of the phosphor does not happen, and when the phosphor has a particle size of not greater than 19 µm and more preferably not greater than 15 µm, the flaking-off of the layer does not occur. In other words, it is favorable that the phosphor has a particle-size distribution in which a lower limit particle size is not less than 3 µm and more preferably 5 µm, and an upper limit particle size is not greater than 19 µm and more preferably not greater than 15 µm, and besides, therein, the content of particles whose particle size either exceeds the upper limit or falls short of the lower limit is not greater than 15 % and more preferably not greater than 1 %.

Next, the relationships between the amount of the phosphorescent phosphor coating applied onto the inner surface of the incandescent lamp and the light outputs are described, taking a case in which a GW 110 V 60 W 95 standard incandescent lamp is employed and Sr₄Al₁₄O₂₅ : Eu, Dy is used as a phosphorescent phosphor.

In this case, with the GW 110 V 60 W 95 standard incandescent lamp being employed for the measurements, a phosphorescent coating weight (1 mg) per unit area (1cm²) of 1 mg/cm² corresponds to a total phosphorescent phosphor coating weight of 0.28 g for the entire inner surface of the incandescent lamp. Under these conditions, incandescent lamps with coating weights at 9 different levels in a range between 0 g and 2.24 g were prepared. For the incandescent lamps with respective coating weights, the luminous flux value (lm), the luminous flux ratio (%) and the afterglow illuminance (lx) were measured for comparisons. The luminous flux ratio (%) means a ratio of the luminous flux of an incandescent lamp with a coating to that of the incandescent lamp without coating (Case for Comparison 1).

**Table 2**

| | Phosphorescent Phosphor Coating Weight (g) | Phosphorescent Phosphor Weight per Unit Area (mg/cm²) | Luminous Flux Value (lm) | Luminous Flux Ratio (%) | Afterglow Illuminance (lx) |
|---|---|---|---|---|---|
| Case for Comparison 1 | 0 | 0 | 690 | 100.0 | 0.00 |
| Example 1 | 0.28 | 1 | 670 | 97.1 | 0.05 |
| Example 2 | 0.56 | 2 | 662 | 95.9 | 0.1 |
| Example 3 | 0.84 | 3 | 654 | 94.8 | 0.13 |
| Example 4 | 1.12 | 4 | 646 | 93.6 | 0.17 |
| Example 5 | 1.4 | 5 | 638 | 92.5 | 0.21 |
| Example 6 | 1.68 | 6 | 630 | 91.3 | 0.25 |
| Example 7 | 1.96 | 7 | 620 | 89.9 | 0.29 |
| Example 8 | 2.24 | 8 | 614 | 89.0 | 0.33 |

Because the phosphorescent phosphor, in some degree, blocks the light, a coating of the phosphorescent phosphor on the inner surface of the globe in the incandescent lamp reduces the luminous flux value of the lamp, while the lamp is on. Meanwhile, when a large number of incandescent lamps are used together, the incandescent lamps with afterglow characteristics are often used only for one out of every several incandescent lamps, and, in such a case, obvious dimness of the incandescent lamps with afterglow characteristics in comparison with the other incandescent lamps gives a conspicuously uneasy appearance. Further, even when, in the ordinary households, only a single lamp is utilized, a dim lamp certainly causes considerable inconvenience so that the incandescent lamp coated with the phosphorescent phosphor must have the brightness that is not less than 90 % (for normal use, the level at which no dimness is felt) of that of the incandescent lamp without the phosphorescent phosphor.

This requirement is herein well satisfied by the incandescent lamps having 1 mg to 6 mg of the phosphor per unit area (97.1 % to 91.3 % of the luminous flux ratio). When the weight exceeds 6 mg, the light flux ratio falls below 90 %, while with a phosphor weight per unit area of 1 mg, the afterglow illuminance (lx) becomes too low (0.05 Ix) so that 2 mg or more is needed. This indicates the optimal range for the phosphorescent phosphor coating weight per unit area is between 2 mg and 6 mg. Further, since the afterglow illuminances (lx) corresponding to this range have substantially similar values of 0.1 lx to 0.25 lx, the afterglow function available after the lamp is turned off can be certainly maintained at a steady level.

When a phosphorescent phosphor other than Sr₄Al₁₄O₂₅ : Eu, Dy is used, too, a luminous flux ratio of 90 % or higher can be obtained as long as the phosphor weight per unit area thereof is within a range of 2 mg to 6 mg.

An application of a coating of a phosphorescent phosphor with a particle size distribution of 3 µm to 19 µm onto the inner surface of an incandescent lamp enables to attain an incandescent lamp which is capable to emit the afterglow after being turned off and, at the same time, free from the thermal degradation and discoloration of the phosphor as well as the flaking-off of the phosphor layer.

The Fire Services Act and the Building Standards Act oblige any large-sized office, theater, underground shopping complex and the like, which falls under conditions that the occupying space thereof has more than a certain size, a large number of people gather therein and such, to set, in addition to the general luminaires, guide lights, emergency lights and the likes. The present invention is particularly well suited for such use and its applicability is, thus, considered high.

## Claims

1. An incandescent lamp wherein an inner surface of a glass globe is coated with a phosphorescent phosphor.

2. An incandescent lamp according to Claim 1, wherein said phosphorescent phosphor has a particle size that is not less than 3 µm but not greater than 19 µm.

3. An incandescent lamp according to Claim 1, wherein said phosphorescent phosphor has a particle size distribution of 3 µm to 19 µm.

4. An incandescent lamp according to Claim 1; wherein said phosphorescent phosphor comprises,
as a host crystal, a compound of the general formula either MAl₂O₄ or MAl₄O₂₅ wherein M is one or more of metal elements selected from the group consisting of calcium, strontium and barium; and
europium (Eu) used as an activator, as well as dysprosium (Dy) or neodymium (Nd) used as a coactivator.

5. An incandescent lamp according to Claim 1, wherein said phosphorescent phosphor comprises Y₂O₂S as a host crystal, and europium (Eu), magnesium (Mg) or titanium (Ti) as an activator.

6. An incandescent lamp according to Claim 1, wherein said phosphorescent phosphor has a coating weight of 2 mg/cm² to 6 mg/cm².

7. An incandescent lamp according to Claim 1, wherein a luminous flux value of the incandescent lamp coated with said phosphorescent phosphor is not less than 90 % of a luminous flux value of the incandescent lamp without any coating of said phosphorescent phosphor.
